(19) **Europäisches Patentamt / European Patent Office / Office européen des brevets**

(11) **EP 4 049 072 B1**

(12) **EUROPEAN PATENT SPECIFICATION**

(45) Date of publication and mention of the grant of the patent:
**25.12.2024 Bulletin 2024/52**

(21) Application number: **20797699.4**

(22) Date of filing: **22.10.2020**

(51) International Patent Classification (IPC):
**G02B 5/02** (2006.01)     **F21S 41/60** (2018.01)
**F21S 41/63** (2018.01)     **F21S 41/20** (2018.01)

(52) Cooperative Patent Classification (CPC):
**F21S 43/26; G02B 5/0205; G02B 5/0215; G02B 5/0231; G02B 5/0257; G02B 5/0278**

(86) International application number:
**PCT/EP2020/079839**

(87) International publication number:
**WO 2021/078915 (29.04.2021 Gazette 2021/17)**

(54) **GRATING STRUCTURE, OPTICAL STRUCTURE AND CORRESPONDING VEHICLE LAMP AND VEHICLE**

GITTERSTRUKTUR, OPTISCHE STRUKTUR SOWIE ENTSPRECHENDE FAHRZEUGLEUCHTE UND FAHRZEUG

STRUCTURE DE RÉSEAU, STRUCTURE OPTIQUE, ET LAMPE DE VÉHICULE ET VÉHICULE CORRESPONDANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.10.2019 CN 201921804752 U**

(43) Date of publication of application:
**31.08.2022 Bulletin 2022/35**

(73) Proprietor: **Valeo Vision**
**93012 Bobigny Cedex (FR)**

(72) Inventors:
• **ZHOU, Haiqing**
  **WUHAN, Hubei 430014 (CN)**
• **LIU, Yang**
  **WUHAN, Hubei 430014 (CN)**

• **YANG, Pingwu**
  **WUHAN, Hubei 430014 (CN)**
• **XUE, Xiaoai**
  **WUHAN, Hubei 430014 (CN)**
• **FAN, Lei**
  **WUHAN, Hubei 430014 (CN)**

(74) Representative: **Valeo Visibility Service Propriété Industrielle**
**c/o Valeo Vision**
**34, rue Saint André**
**93012 Bobigny (FR)**

(56) References cited:
**EP-A1- 3 173 683     EP-A1- 3 364 098**
**EP-A1- 3 453 945     US-A1- 2016 320 627**

**Description**

Technical Field

The present invention relates to the technical field of lighting, in particular to a grating structure, an optical structure, a corresponding vehicle lamp and a vehicle.

Background Art

In the field of vehicle lamps, in order to achieve a specific styling effect, it is often necessary to have a strip-shaped or planar illumination region. Some vehicle lamps use an adhesive film to achieve a planar illumination effect, but this method cannot really be applied to an entire vehicle, and moreover cannot really be applied on a large scale. At the same time, using a method of the prior art, an illumination region of this type often has a rather fuzzy boundary, or the overall illumination effect thereof is not sufficiently uniform. Other illumination structures are shown in EP3453 945 A1, EP3364098 A1, and EP3173683 A1.

Summary of the Invention

In view of the above, one problem solved by an embodiment of the present invention is how to obtain a uniform illumination region with a distinct boundary.
According to one aspect of the present invention, a grating structure is provided, characterized in that the grating structure comprises a light entry part and multiple grating units; wherein the grating unit is a light-transmitting strip, wherein the multiple grating units are parallel to each other and adjacent grating units are connected together.
According to the grating structure, light of a light source can be diffused in a radial direction of the grating unit, thereby forming a light band of a certain length in a visual field.
According to the grating structure of the present invention, wherein a cross section of the grating unit comprises an arc part, so that the grating unit can cause an incident light beam to emerge in a diffused manner along the cross section, thereby forming a strip-shaped light band in a visual field.
By employing a cross section with an arc part, the grating unit according to the present invention can diffuse incident light uniformly, thereby forming a uniform strip-shaped light band.
According to the grating structure of the present invention, the arc part of cross section of the grating unit satisfies the following requirement:

$$L = 2 \times D \times \tan\{\sin^{-1}[n \times \sin(\sin^{-1}\frac{P}{2R_1} - \sin^{-1}\frac{P}{2nR_1})]\}$$

wherein L is length of the strip-shaped light band; D is distance from a light source to the grating structure; n is refractive index of the grating; P is pitch of two grating units; R1 is radius corresponding to the arc part of cross section of the grating unit; and $\alpha$ is angle corresponding to the arc part.
According to the solution of the present invention, a better diffusion effect can be obtained, thus achieving greater uniformity.
According to the grating structure of the present invention, wherein two ends of the arc part of the cross section of the grating unit are each connected to a straight line part, so as to form a strip-shaped light band having a clear boundary line in a visual field.
Connecting straight line parts at the ends of the arc part, i.e. connecting two edges of a curved surface of the light-transmitting strip to flat surfaces, enables the strip-shaped light band emerging after diffusion to have a clear boundary in a visual field.
According to the grating structure of the present invention, wherein the angle $\alpha$ corresponding to the arc part of the cross section is about 50°.
According to another aspect of the present invention, an optical structure is further provided, characterized by comprising light source and multiple said grating structures; wherein the multiple grating structures are respectively arranged in an emergence direction of a light beam of the light source.
According to the solution of the present embodiment, when light beam from a light source has passed through the multiple gratings, a multi-dimensional illumination effect can be achieved; for example, when light beam from a point light source has passed through one grating structure, a strip-shaped light band can be formed; when the light beam has passed through two grating structures, a planar illumination effect e.g. a rhomboid light spot can be formed; and when the light beam has passed through three grating structures, a three-dimensional illumination effect can be formed.

According to the optical structure of the present invention, wherein the optical structure further comprises a movement part; the grating structure is installed in the movement part, and the movement part is able to drive the grating structure to move.

The grating structure can be driven to move by means of the movement part, thus enabling a light emergence effect corresponding to the grating structure to change with the movement.

According to the optical structure of the present invention, wherein the movement part comprises a support for supporting the grating structure, and at least one rotatable part.

According to the solution of the present invention, more light emergence effects can be achieved by using the movement part to drive the grating structure to move.

According to the optical structure of the present invention, wherein respective movement directions of the multiple gratings are different.

When multiple gratings move separately, they can present correspondingly changing illumination effects.

According to the optical structure of the present invention, wherein the optical structure comprises two grating structures, wherein the two grating structures are respectively arranged in the light beam emergence direction, such that the light beam of the light source forms a two-dimensional pattern after passing through the two grating structures.

According to another aspect of the present invention, a vehicle lamp is further provided, wherein the vehicle lamp comprises the optical structure.

According to another aspect of the present invention, a vehicle is further provided, wherein the vehicle comprises the vehicle lamp.

Compared with the prior art, the present invention has the following advantages: each layer of grating structure can increase the dimension of a light beam illumination effect by one, thereby achieving a required multi-dimensional illumination effect; a strip-shaped, planar or even three-dimensional illumination effect, etc. could be presented; at the same time, the grating structure according to the present invention can realize a distinct and clear boundary, thus making patterns of various dimensions presented by the illumination effect more distinct.

Brief Description of the Drawings

Other features, objects and advantages of the present invention will become more obvious through perusal of a detailed description of non-limiting embodiments which refer to the accompanying drawings below:

Fig. 1 shows a structural schematic drawing of a grating structure according to an embodiment of the present invention.

Fig. 2 shows a structural schematic drawing of an optical structure according to an embodiment of the present invention.

Fig. 3 shows a structural schematic drawing of optical structure according to another embodiment of the present invention.

Fig. 4a, Fig. 4b and Fig. 4c show schematic drawings of parameters of a grating unit of a grating structure according to an embodiment of the present invention.

Fig. 5 shows a schematic drawing of parameters of a grating unit of a grating structure according to the present invention.

Fig. 6 shows schematic drawings of a three-dimensional illumination effect according to the present invention.

Fig. 7 shows a schematic drawing of a visual field in a horizontal direction of a grating unit according to the present invention.

Fig. 8 shows a schematic drawing of a visual field in an extension direction of strip of a grating unit according to the present invention.

Fig. 9 shows a schematic drawing of illumination regions within visual fields located at different positions on a grating structure according to the present invention.

List of component labels:

| P1 | grating | P2 | light source |
|----|---------|----|--------------|
|    | structure |  |              |
| P3 | movement part | 100 | light entry part |

(continued)

| P1 | grating | P2 | light source |
|---|---|---|---|
| | structure | | |
| 200 | grating unit | 210 | arc part of cross section |
| 220 | straight line part of cross section | 310 | support |
| 320 | rotatable part | | |

Detailed description of the invention

Preferred embodiments of the present invention are described in greater detail below with reference to the accompanying drawings. Although preferred embodiments of the present invention are shown in the drawings, it should be understood that the present invention may be realized in various forms, and should not be restricted by the embodiments expounded here. On the contrary, these embodiments are provided in order to make the present invention more thorough and complete, and to enable the scope of the present invention to be conveyed to those skilled in the art in a complete fashion.

According to the solution of the present invention, the following are disclosed: a grating structure P1, an optical structure comprising the grating structure P1, a vehicle lamp comprising the optical structure, and a vehicle comprising the vehicle lamp.

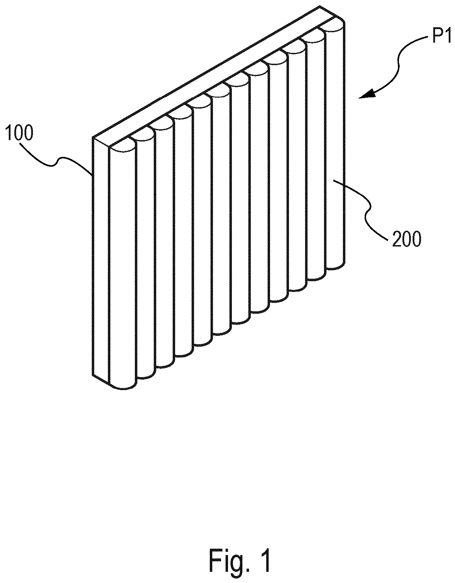

Referring to Fig. 1, Fig. 1 shows a structural schematic drawing of a grating structure according to an embodiment of the present invention.

The grating structure P1 according to the present invention comprises a light entry part 100 and multiple grating units 200. The grating unit 200 is a light-transmitting strip 200'; the multiple grating units 200 are parallel to each other, and adjacent grating units are connected together.

Specifically, the grating structure P1 is a thin-plate structure; one side of the thin-plate structure is the light entry part 100, and the other side has the multiple grating units 200.

Those skilled in the art will understand that in general, the grating unit 200 is an extremely fine structure; a large number of grating units 200 are included on the grating structure P1 according to the present invention.

According to the solution of the present invention, a cross section of the grating unit 200 comprises an arc part 210, so that the grating unit 200 can cause an incident light beam to emerge in a diffused manner, thereby increasing the dimension of illumination effect of the incident light beam in a visual field. For example, a point light source is elongated to form a strip-shaped light band.

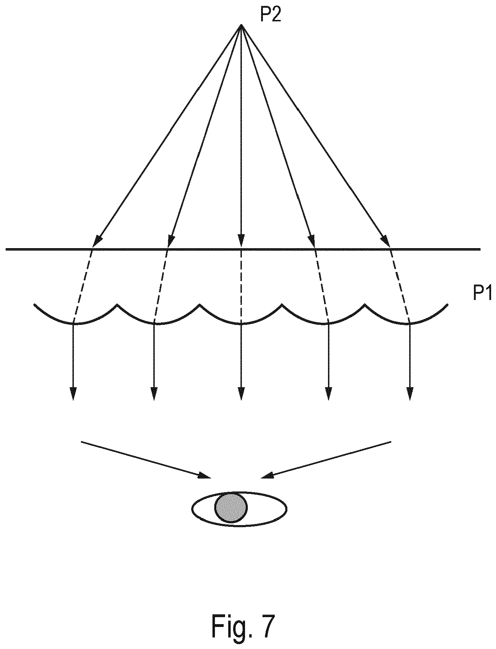

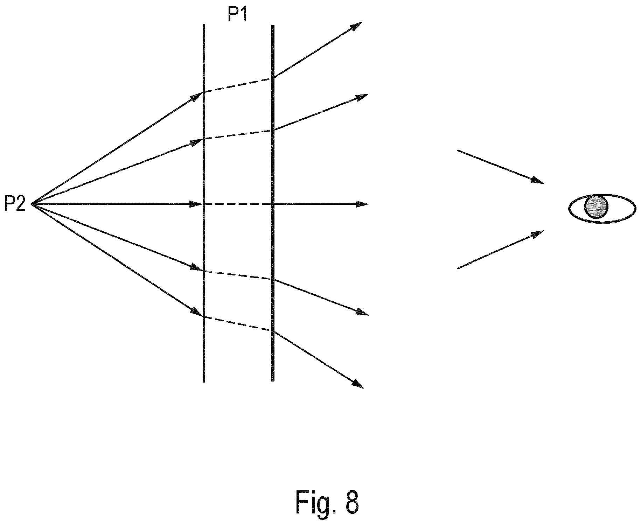

The "visual field" is the range visible from an observer's point of view. Referring to Figs. 7 - 9, Figs. 8 and 7 respectively show schematically a reception region of light beams which emerge in an extension direction of the strip of the grating unit 200 and are received by the observer, and a reception region of light beams emitted in a emergence direction from multiple grating units 200; the visual field referred to in the present invention includes an observation range synthesized from these two reception regions.

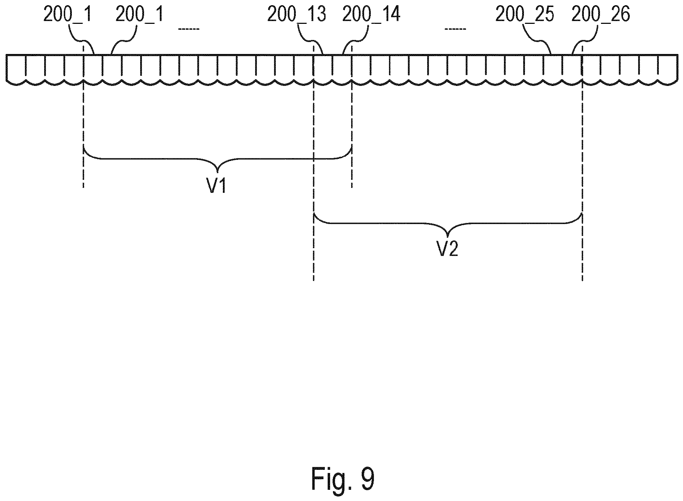

Furthermore, referring to Fig. 9, when the observer is at different positions relative to the grating structure P1, the visual field ranges obtained are different, e.g. V1 and V2; moreover, the multiple grating units 200 contained in the two visual field ranges V1 and V2 and used to form strip-shaped light bands are not exactly the same. As shown in Fig. 9, a strip-shaped light band seen in visual field range V1 is formed by light beams scattered by grating units 200_1 to 200_14; a strip-shaped light band seen in visual field range V2 is formed by light beams scattered by grating units 200_13 to 200_26.

Specifically, the grating unit 200 is a light-transmitting strip having a cross section comprising arc part. That is to say, it is a partial cylinder strip.

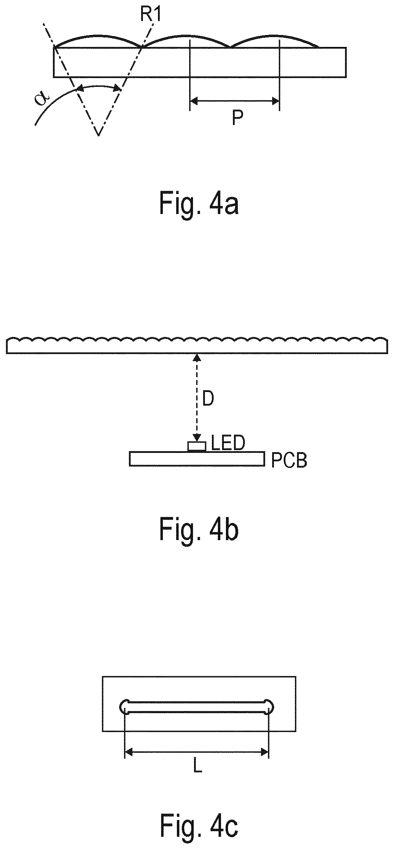

According to a preferred embodiment of the present invention, referring to Fig. 4a, 4b and 4c, the arc part 210 of cross section of the grating unit 200 satisfies the following requirement:

$$L = 2 \times D \times \tan\{\sin^{-1}[n \times \sin(\sin^{-1}\frac{P}{2R_1} - \sin^{-1}\frac{P}{2nR_1})]\}$$

wherein L is length of the strip-shaped light band; D is distance from a light source to the grating structure; n is refractive index of the grating; P is pitch of two adjacent grating units; R1 is radius corresponding to the arc part 210 of the cross section of the grating unit; and $\alpha$ is angle corresponding to the arc part 210.

Preferably, the value ranges of the parameters satisfy the following relationships:

$$\alpha \leq 60°;$$

$$R1 \leq 0.5mm;$$

$$P \leq 0.3mm;$$

$$P < 2R1;$$

$$D \geq 10mm.$$

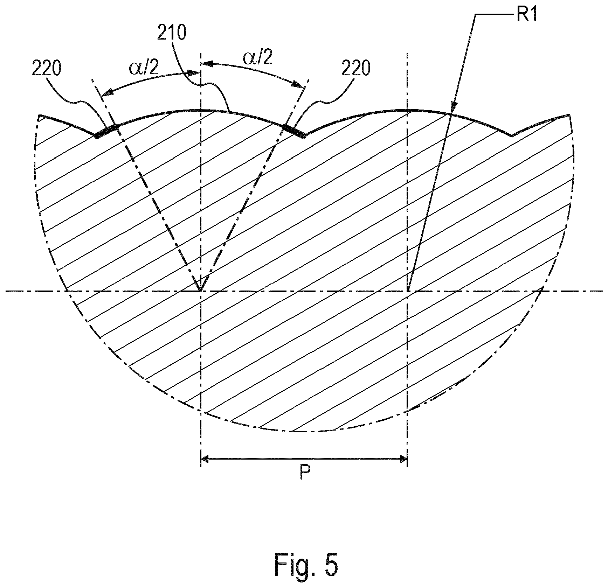

According to the invention, referring to Fig. 5, for the cross section of the grating unit 200, two ends of the arc part 210 are each connected to a straight line part 220.

More preferably, the angle $\alpha$ corresponding to the arc part 210 in the solution of this preferred embodiment may be 50°.

The optical structure according to the present invention comprises a light source P2, and one or more grating structures P1. The one or more grating structures P1 are arranged in an emergence direction of light beam of the light source P2, so that the light beam of the light source P2 sequentially enters the one or more grating structures P1 via the light entry part 100 and emerges from the grating unit 200 thereof.

Specifically, according to the solution of the present invention, by rationally setting the angles which the grating structures make with each other, each grating structure can be used to increase the dimension of the illumination effect. For example, when light beam of a point light source has passed through one grating structure, a strip-shaped light band can be formed; when the light beam has passed through two grating structures, a planar illumination effect, e.g. a rhomboid light spot, can be formed,; and when the light beam has passed through three grating structures, a three-dimensional illumination effect can be formed.

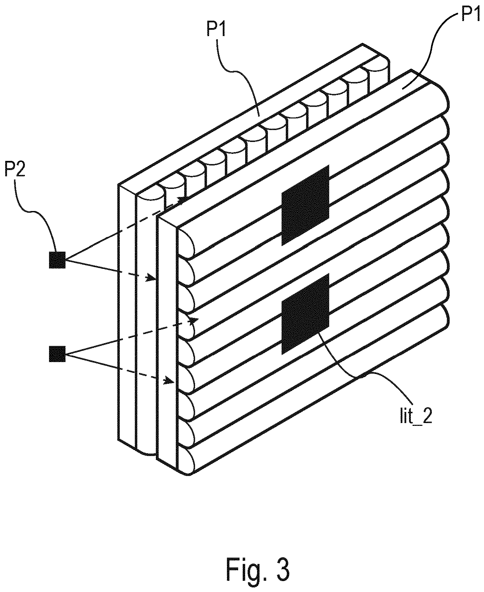

Specifically, as shown in Fig. 3, when light beam of the point light source P2 has passed through a first grating structure, a strip-shaped light band is formed; when light beam of the strip-shaped light band as a light source has passed through a second grating structure as, each point on the strip-shaped light band is elongated in a strip-like manner, to form a rhomboid light spot.

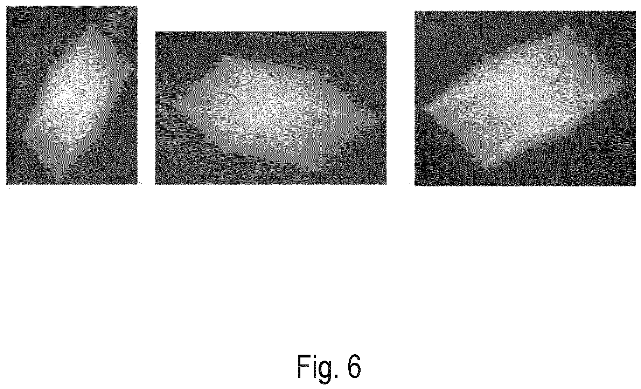

More preferably, those skilled in the art will understand that when the rhomboid light spot has passed through a third grating structure as a light source, a three-dimensional illumination effect as shown in Fig. 6 can be further formed.

Those skilled in the art will understand that when a boundary of an illumination pattern is distinct, effect presented thereby is better.

According to a preferred solution of the present invention, the optical structure according to this embodiment further comprises a movement part P3 (not shown). The movement part corresponds to at least one grating structure P1, and can drive the at least one grating structure P1.

Specifically, the movement part comprises a support 310 (not shown) for supporting the grating structure P1, and at least one rotatable part 320 (not shown).

According to another preferred solution of the present invention, respective movement directions of the multiple grating structures P1 are different.

According to a preferred solution of the present invention, the optical structure comprises two grating structures P1, the two grating structures P1 being respectively arranged in the emergence direction of the light beam, such that the light beam of the light source forms a two-dimensional pattern after passing through the two grating structures.

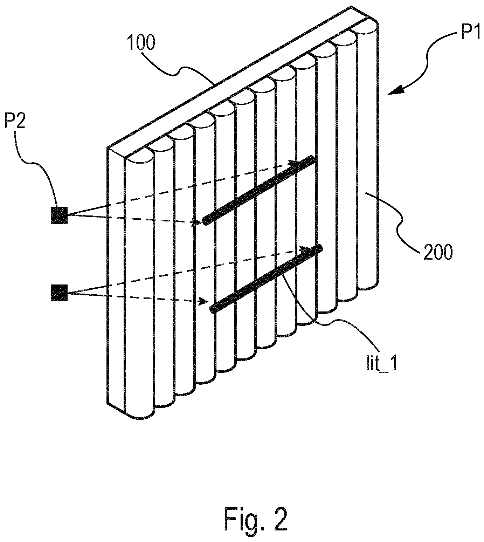

According to a preferred embodiment of the present invention, reference is made to Figs. 2 and 3. The optical structure according to this preferred embodiment comprises two point light sources P2, and two grating structures P1_a and P1_b; a emergence direction of a light beam of the light source P2 is x, and this emergence direction sequentially passes through the light entry part 100 and grating unit 200 of the grating structures P1_a and P1_b.

When light beam of the point light source P2 has passed through the grating structure P1_a, a strip-shaped light band lit_1 is formed; next, when light beam of the strip-shaped light band lit_1 as a light source of the grating structure P1_b has passed through the grating structure P1_b, a quadrilateral light spot lit_2 is formed. The light spot is rhomboid or square.

More preferably, according to a preferred solution of this preferred embodiment, the optical structure further comprises a movement part P3 corresponding to one grating structure P1_b.

The movement part P3 can drive the grating structure P1_b to rotate around the emergence direction x of the light beam, and thus drive the shape of the presented light spot lit_2 to change, e.g. forming rhomboid quadrilaterals with different interior angles, etc.

The grating structure according to the present invention is an injection-moulded member. Preferably, the grating structure is realized by one-piece injection moulding, and is suitable for mass production.

The present invention has the following advantages: each layer of grating structure can increase dimension of illumination effect of a light beam by one, thereby achieving a required multi-dimensional illumination effect; a strip-shaped, planar or even three-dimensional illumination effect, etc. could be presented; at the same time, the grating structure according to the present invention can realize a distinct and clear boundary, thus making patterns of various dimensions presented by the illumination effect more distinct.

The invention is defined by the appended claims.

**Claims**

1. A grating structure (P1), **characterized by** comprising a light entry part (100) and multiple grating units (200);

   wherein the grating unit (200) is a light-transmitting strip (200'), wherein the multiple grating units 200 are parallel to each other and adjacent grating units are connected together,
   wherein a cross section of the grating unit (200) comprises an arc part (210), so that the grating unit (200) can cause an incident light beam to emerge in a diffused manner along the cross section, thereby forming a strip-shaped light band in a visual field,
   wherein two ends of the arc part (210) are each connected to a straight line part (220).

2. The grating structure (P1) according to Claim 1, wherein the arc part (210) of the cross section of the grating unit (200) satisfies the following requirement:

$$ L = 2 \times D \times \tan\{\sin^{-1}[n \times \sin(\sin^{-1}\frac{P}{2R_1} - \sin^{-1}\frac{P}{2nR_1})]\} $$

   wherein L is length of the strip-shaped light band; D is distance from a light source to the grating structure (P1); n is refractive index of the grating unit (200); P is pitch of two adjacent grating units (200); R1 is radius corresponding to the arc part (210) of the cross section of the grating unit (200); and α is angle corresponding to the arc part (210).

3. The grating structure (P1) according to Claim 1 or 2, wherein the angle α corresponding to the arc part (210) is about 50°.

4. An Optical structure, **characterized by** comprising a light source (P2) and multiple grating structures (P1) according to any one of Claims 1 - 3; wherein the multiple grating structures (P1) are arranged in an emergence direction of light beam of the light source (P2).

5. The optical structure according to Claim 4, wherein the optical structure has a movement part (P3) corresponding to the multiple grating structures (P1), the movement part (P3) being able to drive the grating structure (P1) to move.

6. The optical structure according to Claim 5, wherein the movement part (P3) comprises a support (310) for supporting the grating structure (P1), and at least one rotatable part (320).

7. The optical structure according to Claim 5 or 6, wherein respective movement directions of the multiple grating structures (P1) are different.

8. The optical structure according to any one of Claims 4-6, wherein the optical structure comprises two grating structures (P1), wherein the two grating structures (P1) are respectively arranged in the emergence direction of light beam of the light source (P2), such that light beam of the light source (P2), forms a two-dimensional pattern after passing through the two grating structures (P1).

9. A vehicle lamp, **characterized by** comprising the optical structure according to any one of Claims 4 - 8.

10. A vehicle, **characterized by** comprising the vehicle lamp according to Claim 9.

**Patentansprüche**

1. Gitterstruktur (P1), **dadurch gekennzeichnet, dass** sie einen Lichteinführungsteil (100) und mehrere Gittereinheiten (200) umfasst;

 wobei die Gittereinheit (200) ein lichtdurchlässiger Streifen (200') ist, wobei die mehreren Gittereinheiten 200 parallel zueinander sind und benachbarte Gittereinheiten miteinander verbunden sind,
 wobei ein Querschnitt der Gittereinheit (200) einen Bogenteil (210) umfasst, so dass die Gittereinheit (200) einen einfallenden Lichtstrahl veranlassen kann, entlang des Querschnitts diffus auszutreten, um dadurch ein streifenförmiges Lichtband in einem Sichtfeld zu bilden, wobei zwei Enden des Bogenteils (210) jeweils mit einem geradlinigen Teil (220) verbunden sind.

2. Gitterstruktur (P1) nach Anspruch 1, wobei der Bogenteil (210) des Querschnitts der Gittereinheit (200) die folgende Anforderung erfüllt:

$$L = 2 \times D \times \tan\{\sin^{-1}[n \times \sin(\sin^{-1}\frac{P}{2R_1} - \sin^{-1}\frac{P}{2nR_1})]\}$$

 wobei L die Länge des streifenförmigen Lichtbandes ist; D die Distanz von einer Lichtquelle zur Gitterstruktur (P1) ist; n der Brechungsindex der Gittereinheit (200) ist; P der Abstand zweier benachbarter Gittereinheiten (200) ist; R1 der Radius ist, der dem Bogenteil (210) des Querschnitts der Gittereinheit (200) entspricht; und $\alpha$ der Winkel ist, der dem Bogenteil (210) entspricht.

3. Gitterstruktur (P1) nach Anspruch 1 oder 2, wobei der Winkel $\alpha$, der dem Bogenteil (210) entspricht, etwa 50° beträgt.

4. Optische Struktur, **dadurch gekennzeichnet, dass** sie eine Lichtquelle (P2) und mehrere Gitterstrukturen (P1) nach einem der Ansprüche 1 bis 3 umfasst; wobei die mehreren Gitterstrukturen (P1) in einer Austrittsrichtung eines Lichtstrahls der Lichtquelle (P2) angeordnet sind.

5. Optische Struktur nach Anspruch 4, wobei die optische Struktur einen Bewegungsteil (P3) aufweist, der den mehrfachen Gitterstrukturen (P1) entspricht, wobei der Bewegungsteil (P3) in der Lage ist, die Gitterstruktur (P1) anzutreiben, damit sie sich bewegt.

6. Optische Struktur nach Anspruch 5, wobei der Bewegungsteil (P3) einen Träger (310) zum Tragen der Gitterstruktur (P1) und mindestens einen drehbaren Teil (320) umfasst.

7. Optische Struktur nach Anspruch 5 oder 6, wobei die jeweiligen Bewegungsrichtungen der mehreren Gitterstrukturen (P1) unterschiedlich sind.

8. Optische Struktur nach einem der Ansprüche 4 bis 6, wobei die optische Struktur zwei Gitterstrukturen (P1) umfasst, wobei die beiden Gitterstrukturen (P1) jeweils in der Austrittsrichtung des Lichtstrahls der Lichtquelle (P2) angeordnet sind, so dass der Lichtstrahl der Lichtquelle (P2) nach dem Durchtreten durch die beiden Gitterstrukturen (P1) ein zweidimensionales Muster bildet.

9. Fahrzeugleuchte, **dadurch gekennzeichnet, dass** sie die optische Struktur nach einem der Ansprüche 4 bis 8 umfasst.

10. Fahrzeug, **dadurch gekennzeichnet, dass** es die Fahrzeugleuchte nach Anspruch 9 umfasst.

**Revendications**

1. Structure de réseau (P1), **caractérisée en ce qu'**elle comprend une partie d'entrée de lumière (100) et de multiples unités de réseau (200) ;

   dans laquelle l'unité de réseau (200) est une bande transmettant la lumière (200'), dans laquelle les multiples unités de réseau 200 sont parallèles les unes aux autres et les unités de réseau adjacentes sont reliées entre elles,
   dans laquelle une section transversale de l'unité de réseau (200) comprend une partie en arc (210), de sorte que l'unité de réseau (200) peut faire émerger un faisceau de lumière incident de manière diffuse le long de la section transversale, formant ainsi une bande lumineuse en forme de bande dans un champ visuel,
   deux extrémités de la partie en arc (210) étant chacune reliées à une partie en ligne droite (220).

2. Structure de réseau (P1) selon la revendication 1, dans laquelle la partie en arc (210) de la section transversale de l'unité de réseau (200) répond à l'exigence suivante :

$$L = 2 \times D \times \tan\{\sin^{-1}[n \times \sin(\sin^{-1}\frac{P}{2R_1} - \sin^{-1}\frac{P}{2nR_1})]\}$$

   dans laquelle L est la longueur de la bande lumineuse en forme de bande ; D est la distance entre une source lumière et la structure de réseau (P1) ; n est l'indice de réfraction de l'unité de réseau (200) ; P est le pas de deux unités de réseau adjacentes (200) ; R1 est le rayon correspondant à la partie en arc (210) de la section transversale de l'unité de réseau (200) ; et $\alpha$ est l'angle correspondant à la partie en arc (210).

3. Structure de réseau (P1) selon la revendication 1 ou 2, dans laquelle l'angle $\alpha$ correspondant à la partie en arc (210) est d'environ 50°.

4. Structure optique, **caractérisée en ce qu'**elle comprend une source de lumière (P2) et de multiples structures de réseau (P1) selon l'une quelconque des revendications 1 à 3 ; dans laquelle les multiples structures de réseau (P1) sont agencées dans une direction d'émergence du faisceau de lumière de la source de lumière (P2).

5. Structure optique selon la revendication 4, dans laquelle la structure optique a une partie de mouvement (P3) correspondant aux multiples structures de réseau (P1), la partie de mouvement (P3) étant capable d'entraîner le déplacement de la structure de réseau (P1).

6. Structure optique selon la revendication 5, dans laquelle la partie de mouvement (P3) comprend un support (310) pour supporter la structure de réseau (P1), et au moins une partie rotative (320).

7. Structure optique selon la revendication 5 ou 6, dans laquelle les directions de mouvement respectives des multiples structures de réseau (P1) sont différentes.

8. Structure optique selon l'une quelconque des revendications 4 à 6, dans laquelle la structure optique comprend deux structures de réseau (P1), dans laquelle les deux structures de réseau (P1) sont respectivement agencées dans la direction d'émergence du faisceau de lumière de la source de lumière (P2), de telle sorte que le faisceau de lumière de la source de lumière (P2), forme un motif bidimensionnel après avoir traversé les deux structures de réseau (P1).

9. Dispositif lumineux de véhicule, **caractérisée en ce qu'**elle comprend la structure optique selon l'une quelconque des revendications 4 à 8.

10. Véhicule, **caractérisé en ce qu'**il comprend le dispositif lumineux de véhicule selon la revendication 9.

Fig. 1

Fig. 2

P1

P1

P2

lit_2

Fig. 3

Fig. 4a

Fig. 4b

Fig. 4c

Fig. 5

Fig. 6

Fig. 7

Fig. 8

200_1　200_1　......　200_13　200_14　......　200_25　200_26

V1

V2

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3453945 A1
- EP 3364098 A1
- EP 3173683 A1